# EUROPEAN PATENT APPLICATION

(11) **EP 2 166 706 A1**
(43) Date of publication of application: **24.03.2010**
(21) Application number: 09169757.3
(22) Date of filing: 08.09.2009
(51) Int. Cl.: H04L 12/28, H04W 4/12, H04L 12/58, H04L 29/08

(54) **Method of changing status of instant message software**

(30) Priority: 22.09.2008 TW 97136368
(71) Applicant: Acer Incorporated, Hsichih, Taipei Hsien 221 (TW)
(72) Inventor: Tsai, Chieh-Chih, 221, Hsichih Taipei Hsien (TW); Wang, Hui-Yen, 221, Hsichih Taipei Hsien (TW); Hsu, Yun-Chun, 221, Hsichih Taipei Hsien (TW); Lai, Hsiao-Chun, 221, Hsichih Taipei Hsien (TW)
(74) Representative: Beattie, Alex Thomas Stewart

(57) **Abstract**

This invention provides a software status configuration method and a mobile communication device using the same. The mobile communication device has a real-time operation mode and a real-time usage status, respectively representing the status of the user and the usage of the mobile communication device. The mobile communication device further includes a network communication software for performing real-time communication with other contacts online. The network communication software has a user status for indicating whether the user is available for real-time communication. The software status configuration method of the present invention will configure the user status based on combinations of the current real-time operation mode and the real-time usage status.

## Description

### BACKGROUND OF THE INVENTION

### 1. Field of the Invention

This invention relates to a software status configuration method and a mobile communication device using the same and specifically to a mobile phone and a method for configuring the status of the software installed in the mobile phone.

### 2. Description of the Prior Art

The mobile communication devices have become essential electronic products in modern people's daily life. Especially, the mobile communication device is vital for people who are always on the move. New electronic products normally have characteristics such as convenient operation interface, lightness, compact functionality, etc. As telecommunication technology progresses, the popularity of the mobile communication device has almost reached everyone. Furthermore, the breakthrough in hardware calculation capability allows the mobile communication device to incorporate more functions other than audio communication.

The instant messenger is a telecommunication service which is recently incorporated into more and more mobile communication devices. The instant messenger allows two or more people to send text messages, files, audio or video signals via the internet. In this way, other than the conventional voice communication, the user can also communicate with people online using the instant messenger. However, the mobile communication devices may have a synchronization problem. The mobile communication device has an operation mode (such as "Normal", "Conference" or "Outdoor") configurable by the user to indicate the availability of the user. The mobile communication device also has a usage status (such as "Calling" or "Standby") which indicates the status of the mobile communication device. The instant messenger also has a user status configured by the user such as "Online", "Busy", "Away", or "Calling". When the user is making a call or having a conference, the operation mode of the mobile communication device may be set at "Conference". However, the user status of the instant messenger is not synchronized with the operation mode or the usage status of the mobile communication device. The instant messenger may have the user status different to "Conference" and thus creates misunderstanding between users. For instance, when the user is making a call or having a conference, he or she may forget to configure the user status of the instant messenger and the user status of the instant messenger thus remains "Online". A person may attempt to communicate with the user who is unable to respond and thus the user misses an opportunity to communicate with the person.

It is not only time-consuming and troublesome for the user to configure the user status of the instant messenger. The user may also lose interest in using the instant messenger. Furthermore, if the user is in driving or commuting, manually configuring the user status may create unnecessary safety issues.

### SUMMARY OF THE INVENTION

It is an object of the present invention to provide a software status configuration method and a mobile communication device using the same to reduce the procedures and time required to configure a network communication software.

It is another object of the present invention to provide a software status configuration method and a mobile communication device using the same to synchronously notify contacts on other platforms of the current status of the user.

The software status configuration method of the present invention includes establishing a setting table based on at least one of an operation mode group and a usage status group of the mobile communication device, wherein the setting table includes a plurality of status settings, acquiring at least one of a real-time operation mode and a real-time usage status, wherein the real-time operation mode and the real-time usage status are respectively selected from the operation mode group and the usage status group, determining the status setting of the setting table corresponding to the real-time operation mode or the real-time usage status and configuring the user status of the network communication software based on the determined status setting.

Furthermore, the mobile communication device of the present invention includes a processor and a storage device electrically connected to the processor. The storage device includes at least one operation mode group having at least one real-time operation mode, at least one usage status group having at least one real-time usage status, a network communication software including a user status for accepting or transmitting a signal, and a setting table including a plurality of status settings. Each of the status settings has a combination of the real-time operation mode and the real-time usage status and a corresponding user status. The processor acquires a real-time operation mode and a real-time usage status to configure the user status.

### BRIEF DESCRIPTION OF THE DRAWINGS

FIG. 1 is a block diagram of the mobile communication device of the present invention;

FIG. 2 is a schematic view of the setting table of the present invention, wherein the setting table includes a plurality of status settings;

FIG. 3 is a flow chart of the software status configuration method of the present invention;

FIG. 4 is a modification of the software status configuration method illustrated in FIG. 3;

FIG. 5 is a flow chart of another embodiment of the software status configuration method;

FIG. 6 is a flow chart of a modification of the software status configuration method illustrated in FIG. 5;

FIG. 7 is a flow chart of yet another embodiment of the software status configuration method, wherein the step of acquiring a real-time operation mode and a real-time usage status is performed periodically;

FIG. 8 is a flow chart of a modification of the software status configuration method illustrated in FIG. 3; and

FIG. 9 is a flow chart of yet another modification of the software status configuration illustrated in FIG. 3.

### DETAILED DESCRIPTION OF THE PREFERRED EMBODIMENT

The present invention provides a software status configuration method for a mobile communication device and a mobile communication device using the software status configuration method. The software status configuration method of the present invention is impletmented to automatically set the user status of an instant messenger, but is not limited thereto. The software status configuration method can be applied to other software requiring status configuration. The abovementioned software allows at least two people to communicate with each other online via video or text. Furthermore, the mobile communication device includes conventional mobile phones or smart phones, but is not limited thereto. The mobile communication device can also include other portable communication devices installed with application software.

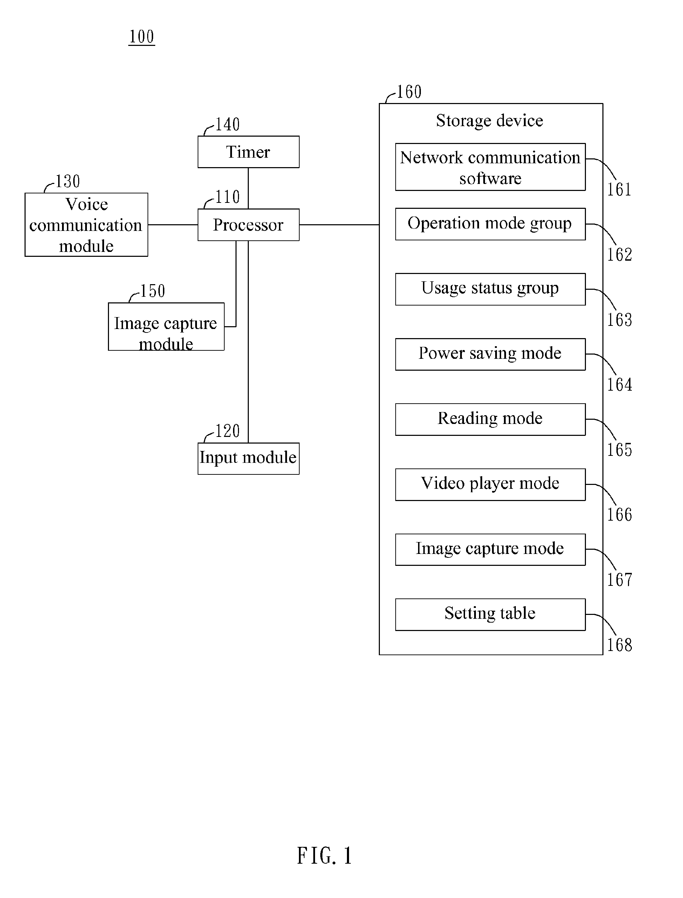

FIG. 1 is a block diagram of the mobile communication device of the present invention. As FIG. 1 shows, the mobile communication device 100 of the present embodiment includes a processor 110, an input module 120, a voice communication module 130, a timer 140, an image capture module 150, and a storage device 160, but is not limited thereto. In different embodiments, the mobile communication device 100 can include a global positioning system module or other electronic module with different functions. The processor 110 is configured to accept user commands or electronic data from other electronic modules. Afterward, the processor 110 controls the operation of the mobile communication device 100 or transmits electronic signals corresponding to the user commands. The input module 120 is a keyboard, but is not limited thereto. The input module 120 can include a touch screen or other suitable electronic devices. The voice communication module 130 transforms a voice signal into a sound, and vice versa, so that the user can carry out voice communication with one or more people. The voice communication module 130 of the present embodiment includes a speaker, a microphone, or other suitable electronic devices such as a Bluetooth earphone. The image capture module 150 is configured to take photos or video clips and store the corresponding electronic data in a storage device.

The mobile communication device 100 illustrated in FIG. 1 includes the storage device 160 for storing electronic data, application software program, and settings related to the operations of the mobile communication device 100. The storage device 160 includes network communication software 161, wherein the network communication software 161 is provided for user to communicate with other users via internet using text messages, document files, voice, and video, but is not limited thereto. In different embodiments, the network communication software 161 also includes software such as internet phone for transmitting and accepting information via internet. The network communication software 161 has a user status for indicating and describing whether the user is available for using the network communication software 161, wherein the user status can be selectively modified by the user. The user status can be modified by the user to status such as "Online", "Offline", "Busy", "Away", "Out for Meal", etc. to indicate the availability of the user and inform other users whether the user is available for using the network communication software 161. Furthermore, in the present embodiment, the abovementioned statuses are default settings and provided for the user to select, but are not limited thereto. In different embodiments, the user can add a new user status or change the existing user status by using the input module 120.

As FIG. 1 shows, the storage device 160 further includes an operation mode group 162 and a usage status group 163, wherein the operation mode group 162 and the usage status group 163 include a plurality of real-time operation modes and a plurality of the real-time usage statuses, respectively. In the present embodiment, the real-time operation mode can be selectively configured by the user and the settings of the mobile communication device are accordingly changed corresponding to the current user status. For instance, if the real-time operation mode is in "Conference" mode, then the mobile communication device 100 will deactivate the voice communication module 130 (or the speaker) to avoid interrupting the conference. In different embodiments, when the real-time operation mode is at "Conference" mode, the mobile communication device 100 can notify the user of any incoming call or message via vibration. The real-time usage status indicates whether the mobile communication device 100 is in use. For instance, when the real-time usage status is at "Stand-By" mode, it means that the mobile communication device 100 has not been used for a period of time.

Furthermore, in the embodiment illustrated in FIG. 1, the storage device 160 further includes a plurality of settings for the processor 110 to control the hardware of the mobile communication device 100. The real-time usage status includes various modes such as a power saving mode 164, a reading mode 165, a video player mode 166 and an image capture mode 167, but is not limited thereto. In different embodiments, the storage device 160 can include other modes such as a global positioning mode that can be integrated into the mobile communication device 100. When the mobile communication device 100 is not used for voice communication or when the input module 120 is not used for a period of time, the power saving mode 164 will decrease the luminance of the display module of the mobile communication device 100 to reduce power consumption of the mobile communication device 100. In the embodiment illustrated in FIG. 1, the storage device 160 can store an electronic document which includes electronic books or other electronic files containing texts. The reading mode 165 includes displaying the electronic document on the display module for the user to read. Furthermore, the storage device 160 can also include electronic video files or electronic audio files, wherein the video player mode 166 includes converting the electronic video files or the electronic audio files into images and sounds and then presenting the images and sounds using the display module and the speaker of the mobile communication device 100. The user can take photos or video clips by setting the mobile communication device 100 at the image capture mode 167. The mobile communication device 100 is then ready to acquire instant images (photos) or continuous images (video clips).

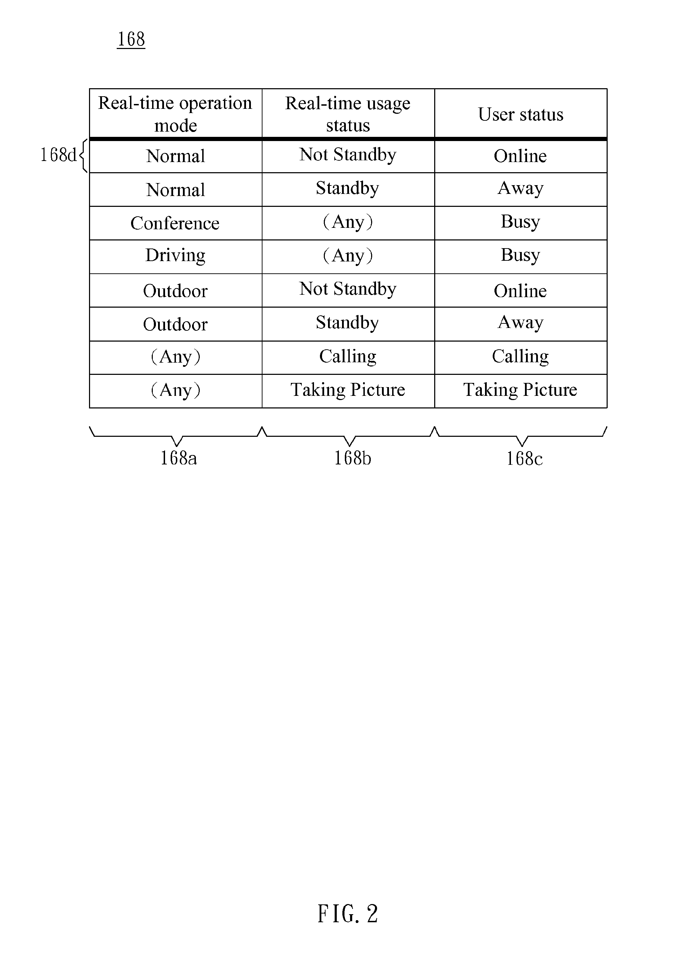

FIG. 2 is a schematic view of a setting table of the present invention, wherein the setting table 168 includes a plurality of status settings 168d. Each status setting 168d includes a combination of the real-time operation mode 168a and the real-time usage status 168b as well as a corresponding user status 168c. In the present embodiment, the same real-time operation mode 168a can be combined with different real-time usage status 168b. As FIG. 2 shows, the "Normal" real-time operation mode 168a can combine respectively with the "Normal" or "Standby" real-time usage status 168b as well as the "Online" or "Away" user status. Similarly, the same real-time usage status 168b can respectively correspond to different real-time operation mode 168a and associated user statuses 168c.

As FIG. 2 shows, a plurality of real-time operation mode 168a may correspond to a specific user status 168c. In other words, one real-time operation mode 168a may combine with different real-time usage status 168b but still corresponds to the same user status 168c. In the embodiment illustrated in FIG. 2, when the real-time operation mode 168a is set at "Conference" or "Driving", no matter what associated real-time usage status 168b is, the user status 168c will be registered as "Busy" to indicate that the user is not available for real-time communication. Similarly, a plurality of the real-time usage status 168b may correspond to a specific user status 168c. As FIG. 2 shows, when the real-time usage status 168b is set at "Calling", no matter what associated real-time operation mode 168a is, the user status 168c will be registered as "Calling". For instance, when the user is having a conversation with other mobile phone user, the real-time usage status 168b will be set at "Calling", even if the real-time operation mode 168a is set at "Normal", "Conference", or "Driving". The user status 168c will always be set at "Calling" in the duration of the mobile phone conversation.

In the embodiment illustrated in FIG. 2, the setting table 168 is predetermined and cannot be changed, but is not limited thereto. In different embodiments, each status setting 168d in the setting table 168 can be changed or configured by the user. Furthermore, the user can also add different status setting 168d in the setting table 168 according to personal preferences.

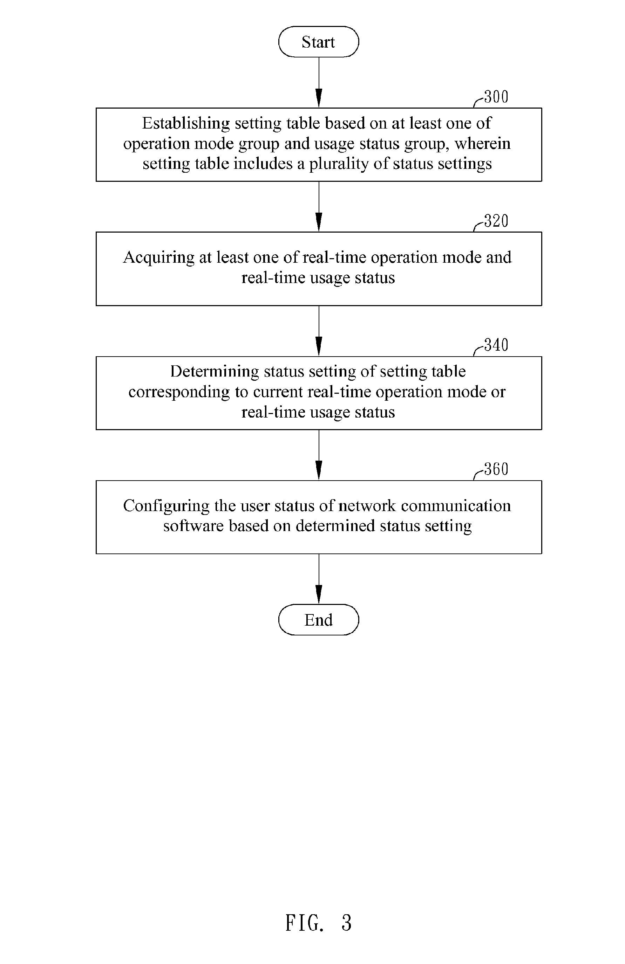

The present invention also provides a software status configuration method. As FIG. 3 shows, the software status configuration method includes step 300 of establishing a setting table based on at least one of an operation mode group and a usage status group, wherein the setting table includes a plurality of status settings. The operation mode group and the usage status group include a plurality of real-time operation modes and a plurality of real-time usage statuses respectively. Step 320 includes acquiring at least one of a real-time operation mode and a real-time usage status, wherein the real-time operation mode and the real-time usage status are respectively selected from the operation mode group and the usage status group. The real-time operation mode can be configured by the user while the real-time usage status changes automatically according to the current usage status of the mobile communication device. Step 340 includes determining the status setting of the setting table corresponding to the current real-time operation mode or the real-time usage status. In the present embodiment, the real-time operation mode or the real-time usage status used as a reference or condition for selecting certain status setting, but is not limited thereto. In different embodiments, certain real-time operation mode (such as "Conference") or certain real-time usage status (such as "Calling") can be used to correspondingly configure the user status. Step 360 includes configuring the user status of a network communication software based on the determined status setting. In the present embodiment, the network communication software is an instant messenger such as MSN, but is not limited thereto. The network communication software also includes other software capable of showing the user status.

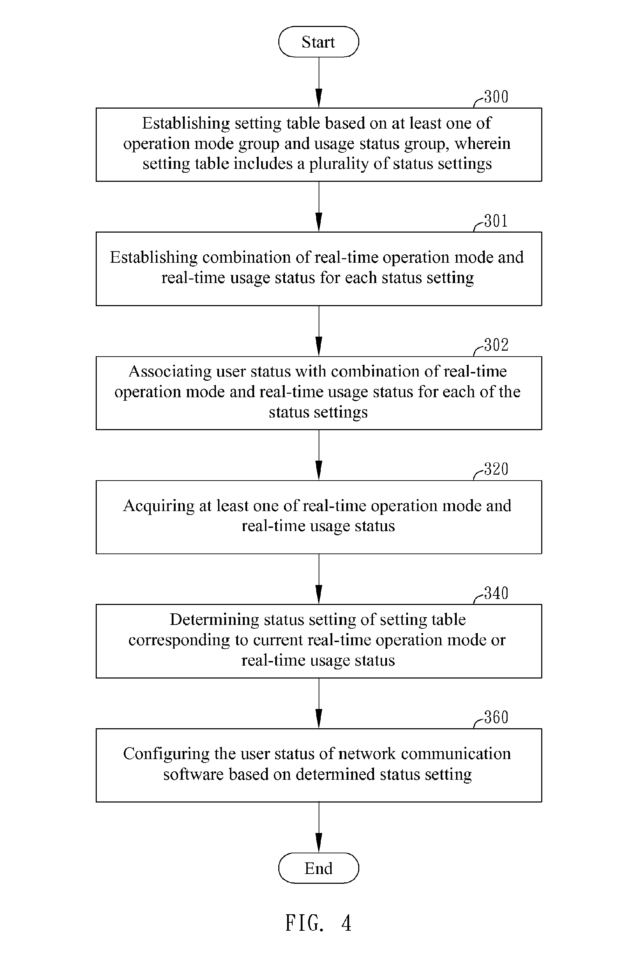

As FIG. 4 shows, the software status configuration method further includes step 301 of establishing a combination of the real-time operation mode and the real-time usage status for each status setting. Each status setting corresponds to one possible scenario for the user to use the mobile communication device. Step 302 includes associating the user status with the combination of the real-time operation mode and the real-time usage status for each of the status settings. Each user status represents different scenario and indicates whether the user of the mobile communication device is available for using the network communication software.

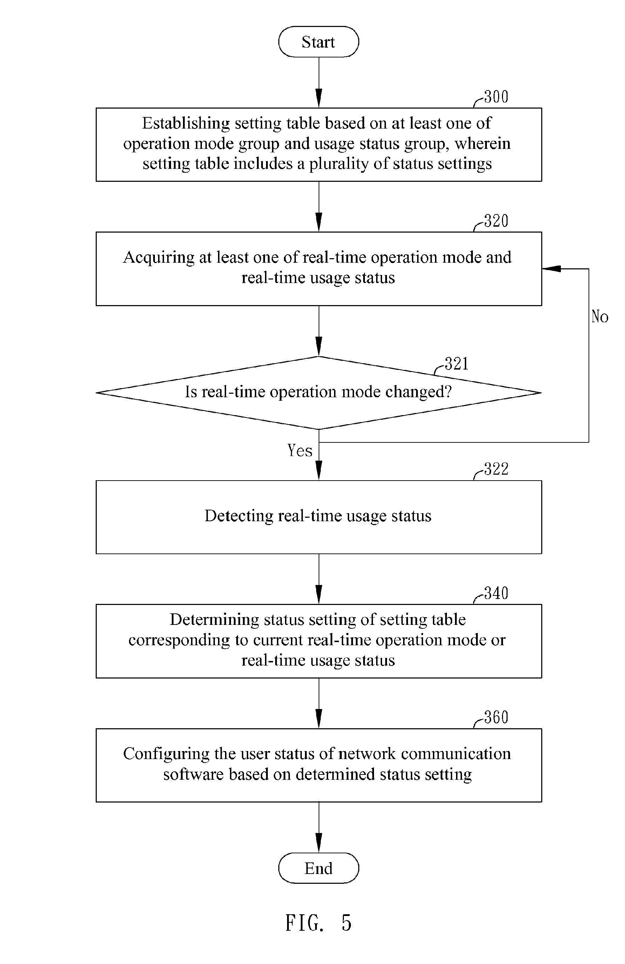

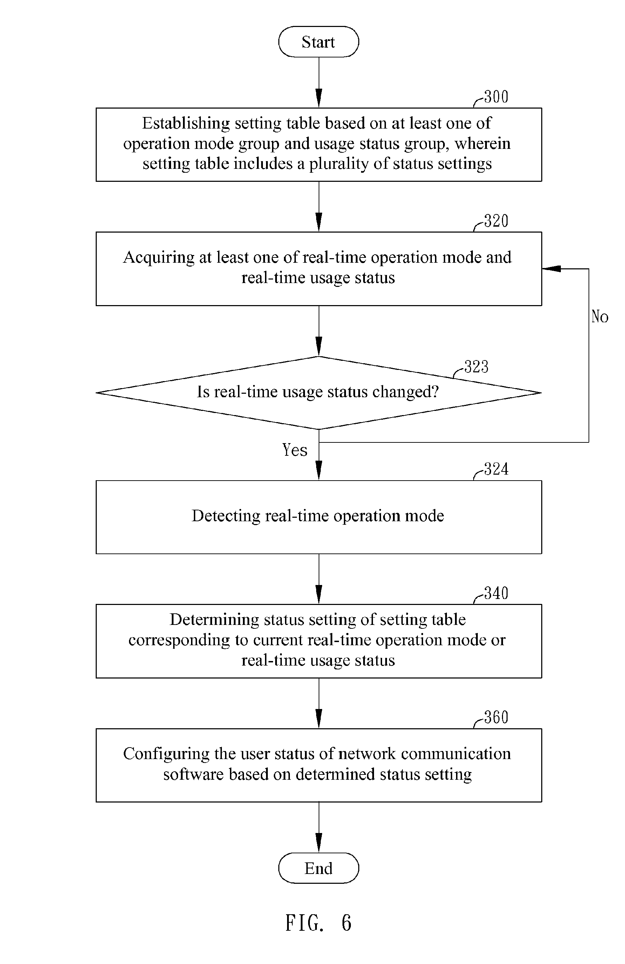

FIG. 5 is a flow chart illustrating another embodiment of the software status configuration method. In the present embodiment, step 322 includes detecting the real-time usage status after the real-time operation mode is changed. Similarly, as FIG. 6 shows, step 324 includes detecting the real-time operation mode after the real-time usage status is changed. In the embodiments illustrated in FIG. 5 and FIG. 6, step 322 and step 324 track the current real-time operation mode and the real-time usage status of the mobile communication device and update the user status of the network communication software according to the combination of the detected real-time operation mode and the real-time usage status based on the setting table.

Furthermore, in the embodiment illustrated in FIG. 5, the software status configuration method further includes step 321 of determining if the real-time operation mode 168a is changed. If the real-time operation mode 168a is changed, step 321 further includes transmitting an alternation signal to configure the user status of the mobile communication device. Similarly, in the embodiment illustrated in FIG. 6, the software status configuration method further includes step 323 of determining if the real-time usage status 168c is changed. If the real-time usage status 168c is changed, step 323 further includes transmitting an alternation signal to configure the user status of the mobile communication device.

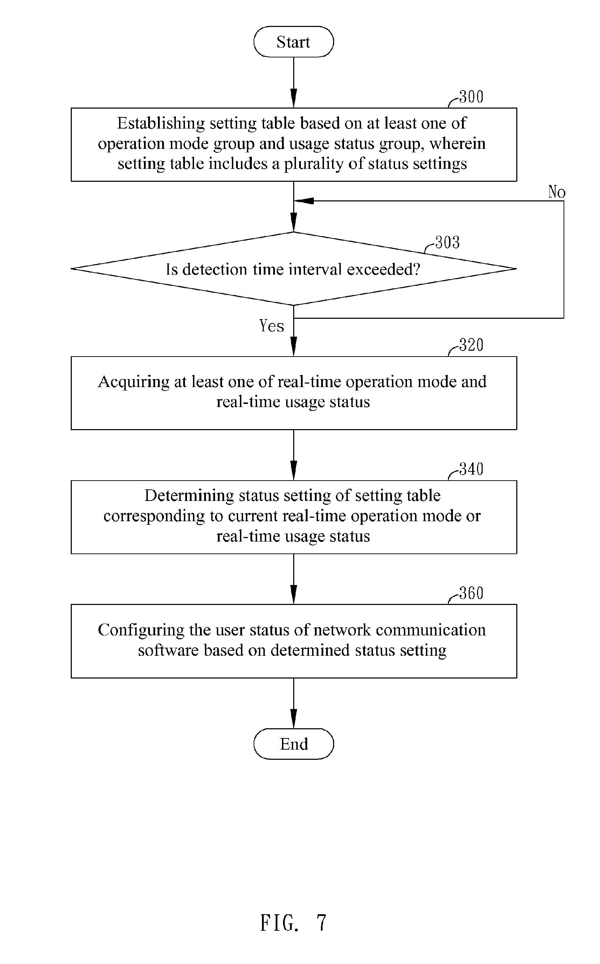

FIG. 7 is a flow chart illustrating yet another embodiment of the software status configuration method. In the present embodiment, the mobile communication device includes a timer for calculating a detection time interval. The software status configuration method includes performing step 303 of determining if a detection time interval is exceeded. If the detection time internal is exceeded, step 320 of detecting the real-time operation mode or the real-time usage status is executed. In other words, the step 320 of detecting the real-time operation mode or the real-time usage status is executed periodically. The length of the detection time interval is preferably fixed but can also be adjusted based on preferences of the user.

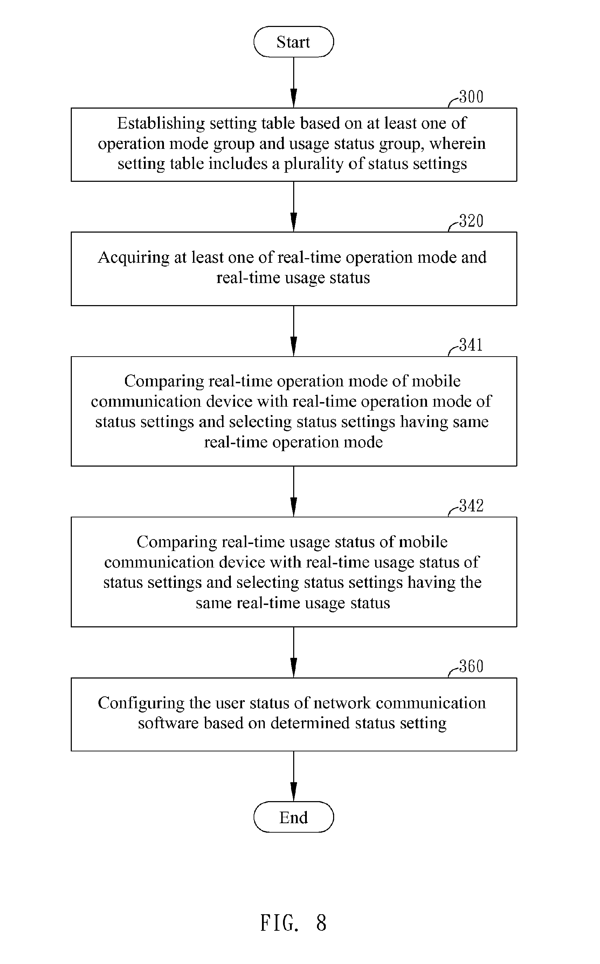

FIG. 8 is a flow chart of another embodiment of the software status configuration method. In the present embodiment, the software status configuration method includes step 341 of comparing the real-time operation mode of the mobile communication device with the real-time operation mode of the status settings and selecting the status settings having the same real-time operation mode. In the present embodiment, the status setting of the setting table has the corresponding real-time operation mode and the real-time usage status.

Furthermore, as shown in FIG. 8, the software status configuration method further includes step 342 of comparing the real-time usage status of the mobile communication device with the real-time usage status of the status settings and selecting the status settings having the same real-time usage status.

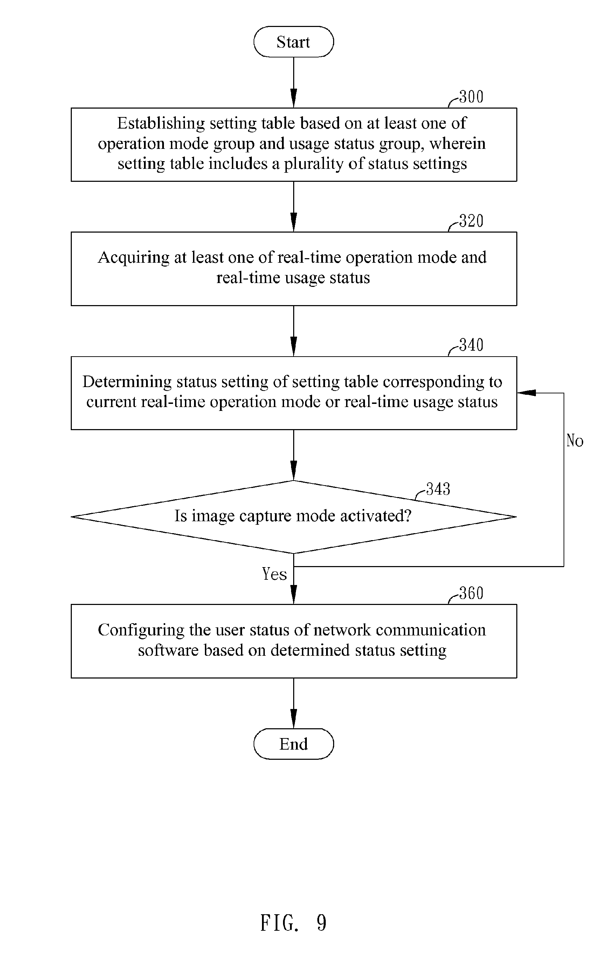

FIG. 9 illustrates yet another embodiment of the software status configuration method. In the present embodiment, the mobile communication device has a plurality of functions for using the hardware of the mobile communication device or for processing electronic data stored in the storage device. The abovementioned functions include power saving mode, reading mode, video player mode, or image capture mode, but are not limited thereto. In different embodiments, the mobile communication device can also include global positioning system or other suitable functions. The software status configuration method will configure the real-time operation mode, the real-time usage status, or the user status of the network communication software after at least one of the functions is activated. For instance, as FIG. 9 shows, the software status configuration method further includes step 343 of determining whether the mobile communication device enters or exits an image capture mode to take photos or video clips. If the image capture mode is activated or deactivated, the software status configuration method will configure the network communication software accordingly. In the present embodiment, the software status configuration method configures the user status as "Filming"; but in different embodiments, the software status configuration method can selectively configure the user status as "Busy" or other suitable statuses. Similarly, after the mobile communication device leaves the image capture mode, the software status configuration method will configure the user status as "Online" or other suitable statuses.

The above is a detailed description of the particular embodiment of the invention which is not intended to limit the invention to the embodiment described. It is recognized that modifications within the scope of the invention will occur to a person skilled in the art. Such modifications and equivalents of the invention are intended for inclusion within the scope of this invention.

## Claims

1. A software status configuration method for a mobile communication device, the mobile communication device including a network communication software having a user status, the method comprising:
establishing a setting table based on at least one of an operation mode group and a usage status group of the mobile communication device, wherein the setting table includes a plurality of status settings;
acquiring at least one of a real-time operation mode and a real-time usage status,
wherein the real-time operation mode and the real-time usage status are respectively selected from the operation mode group and the usage status group;
determining the status setting of the setting table corresponding to the real-time operation mode or the real-time usage status; and
configuring the user status of the network communication software based on the determined status setting.

2. The software status configuration method of claim 1, wherein the step of
establishing the setting table includes:
establishing a combination of the real-time operation mode and the real-time usage status for each the status setting;
associating the user status with the combination of the real-time operation mode and the real-time usage status for each of the status settings.

3. The software status configuration method of claim 2, wherein different status settings correspond to the same user status.

4. The software status configuration method of claim 1, wherein the step of acquiring at least one of the real-time operation mode and the real-time usage status includes detecting the real-time operation mode and the real-time usage status of the mobile communication device.

5. The software status configuration method of claim 4, wherein the step of acquiring at least one of the real-time operation mode and the real-time usage status includes detecting the real-time usage status after the real-time operation mode is changed.

6. The software status configuration method of claim 4, wherein the step of acquiring at least one of the real-time operation mode and the real-time usage status includes detecting the real-time operation mode after the real-time usage status is changed.

7. The software status configuration method of claim 4, wherein the step of acquiring at least one of the real-time operation mode and the real-time usage status includes detecting the real-time operation mode and the real-time usage status at each detection time interval.

8. The software status configuration method of claim 1, wherein the step of determining the status setting includes:
comparing the real-time operation mode of the mobile communication device with the real-time operation mode of the status settings and selecting the status settings having the same real-time operation mode; and
comparing the real-time usage status of the mobile communication device with the real-time usage status of the status settings and selecting the status settings having the same real-time usage status.

9. The software status configuration method of claim 1, further comprising determining the status setting after a power saving mode of the mobile communication device is activated or deactivated.

10. The software status configuration method of claim 1, further comprising determining the status setting after an image capture mode of the mobile communication device is activated or deactivated.

11. The software status configuration method of claim 1, further comprising determining the status setting after a voice communication mode is activated or deactivated.

12. The software status configuration method of claim 1, further comprising determining the status setting after a reading mode is activated or deactivated.

13. The software status configuration method of claim 1, wherein the step of configuring the user status includes after the real-time operation mode or the real-time usage status is changed, transmitting an alternation signal to configure the user status of the mobile communication device.

14. A mobile communication device capable of performing software status configuration, comprising:
a processor;
a storage device electrically connected to the processor, the storage device including:
at least one operation mode group having at least one real-time operation mode;
at least one usage status group having at least one real-time usage status;
a network communication software for accepting or transmitting a signal, wherein the network communication software includes a user status; and
a setting table including a plurality of status settings, each of the status setting has a combination of the real-time operation mode and the real-time usage status and a corresponding user status,
wherein the processor acquires the real-time operation mode and the real-time usage status to configure the user status as the corresponding user status based on the setting table.

15. The mobile communication device of claim 14, further includes a voice communication module electrically connected to the processor, the processor configuring the real-time operation mode of the mobile communication device and the user status of the network communication software after detecting that the voice communication module is activated or deactivated.
